# EUROPÄISCHE PATENTANMELDUNG

(11) **EP 3 226 484 A1**
(43) Veröffentlichungstag der Anmeldung: **04.10.2017**
(21) Anmeldenummer: 16163249.2
(22) Anmeldetag: 31.03.2016
(51) Int. Cl.: H04L 12/40, H04L 12/851, H04L 12/931

(54) **VERFAHREN ZUR DATENÜBERMITTLUNG IN EINEM KOMMUNIKATIONSNETZ EINES INDUSTRIELLEN AUTOMATISIERUNGSSYSTEMS UND KOMMUNIKATIONSGERÄT**

(71) Anmelder: Siemens Aktiengesellschaft, 80333 München (DE)
(72) Erfinder: Steindl, Günter, 92284 Poppenricht (DE)

(57) **Zusammenfassung**

Zur Datenübermittlung in einem Kommunikationsnetz eines industriellen Automatisierungssystems werden entsprechend PROFINET-Protokoll zu übermittelnde Datenrahmen einem ausgewählten virtuellen lokalen Netz zugeordnet. Außerdem werden die entsprechend PROFINET-Protokoll zu übermittelnden Datenrahmen in mehrere Gruppen von PROFINET-Datenrahmen unterteilt. Für die Gruppen von PROFINET-Datenrahmen werden in Netzinfrastrukturgeräten jeweils separate Ressourcen zur Übermittlung der jeweiligen Gruppe zugeordneter Datenrahmen reserviert.

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

Eine priorisierte Übermittlung von Datenrahmen ist beispielsweise auf Grundlage von Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (audio/video bridging) über Kommunikationsnetze ist entsprechend Standard IEEE 802.1Qav eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Aus WO 2004/030297 A1 ist ein Verfahren zur Übertragung von Datentelegrammen in einem geschalteten zyklischen Kommunikationssystem bekannt, bei dem echtzeitkritische Datentelegramme in einem reservierten ersten Bereich eines Übertragungszyklus übertragen werden, ohne deren Sende- und Empfangszeitpunkte in durchleitenden Teilnehmern vorab planen zu müssen. Ein zeitlicher Beginn des ersten Bereichs eines Übertragungszyklus wird von allen Teilnehmern in allen Übertragungszyklen durch Überwachung garantiert. Eine zeitliche Dauer des ersten Bereichs eines Übertragungszyklus kann fest vorgeben bzw. eingestellt oder durch Anwendung eines Time-Out-Verfahrens automatisch eingestellt werden.

WO 2010/026067 A1 betrifft ein Verfahren zum Übertragen von Datenpaketen in einem Kommunikationsnetz, bei dem erste Datenpakete mit einer niedrigen Priorität zwischen einem Sender und einem Empfänger übertragen werden. Zweite Datenpakete werden mit einer hohen Priorität gegenüber den ersten Datenpaketen bevorzugt zwischen dem Sender und dem Empfänger übertragen. Bei einem vom Sender an den Empfänger zu übertragenden zweiten Datenpaket wird überprüft, ob gegenwärtig ein erstes Datenpaket übertragen wird. Bei positivem Überprüfungsergebnis wird die Übertragung des ersten Datenpakets abgebrochen oder unterbrochen, und das zweite Datenpaket wird im Anschluss daran übertragen. Nach der Übertragung des zweiten Datenpakets wird die Übertragung des nicht übertragenen ersten Datenpakets wiederholt oder die Übertragung des Rests des unvollständig übertragenen ersten Datenpakets veranlasst. Jedes erste Datenpaket wird parallel zu einem Sendevorgang in einem Zwischenspeicher gespeichert und erst nach einer vollständigen Übertragung des ersten Datenpakets aus dem Zwischenspeicher gelöscht.

In EP 2 538 619 A1 ist ein Verfahren zur Übertragung von Datenpaketen in einem Ethernet-Automatisierungsnetz beschrieben, bei dem zunächst ein erstes Datenpaket mit einer ersten Priorität durch einen Sender empfangen wird. Dann wird ein Sendevorgang des ersten Datenpakets vom Sender zu einem Empfänger gestartet. Darüber hinaus wird ein zweites Datenpaket mit einer zweiten Priorität durch den Sender empfangen, wobei die zweite Priorität höher als die erste Priorität ist. Vor einer Übertragung des zweiten Datenpakets wird der Sendevorgang des ersten Datenpakets abgebrochen. Anschließend wird das zweite Datenpaket übertragen.

Aus EP 2 827 207 A1 ist bekannt, dass bei einer Übermittlung von Datenrahmen mittels eines Kommunikationsgeräts für Datenrahmen, die eine über einem vorgebbaren Prioritätsschwellwert liegende Übermittlungspriorität aufweisen, eine übermittelte Datenmenge erfasst wird. Die übermittelte Datenmenge wird periodisch innerhalb zumindest eines Überwachungszyklus erfasst. Die für jeden Überwachungszyklusdurchlauf erfasste Datenmenge wird auf eine Überschreitung eines vorgebbaren Mengenschwellwerts überwacht. Bei einer Überschreitung des Mengenschwellwerts wird ein betroffener Anschluss des Kommunikationsgeräts für einen Überwachungszyklusdurchlauf während einer Sperrzeit bis zu einem Ende des jeweiligen Überachungszyklusdurchlaufs gegen eine Übermittlung von Datenrahmen mit einer über dem Prioritätsschwellwert liegenden Übermittlungspriorität gesperrt.

Der vorliegenden Erfindung liegt die Aufgabe zugrunde, ein Verfahren zur Datenübermittlung in einem Kommunikationsnetz eines industriellen Automatisierungssystems anzugeben, das trotz knapper Ressourcen in Netzinfrastrukturgeräten eine deterministische Übermittlung priorisiert zu behandelnder Datenrahmen ermöglicht, sowie ein zur Durchführung des Verfahrens geeignetes Kommunikationsgerät anzugeben.

Diese Aufgabe wird erfindungsgemäß durch ein Verfahren mit den in Anspruch 1 angegebenen Merkmalen sowie durch ein Kommunikationsgerät mit den in Anspruch 8 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden entsprechend PROFINET-Protokoll zu übermittelnde Datenrahmen einem ausgewählten virtuellen lokalen Netz zugeordnet. Außerdem werden die entsprechend PROFINET-Protokoll zu übermittelnden Datenrahmen in mehrere Gruppen von PROFINET-Datenrahmen unterteilt. Die entsprechend PROFINET-Protokoll zu übermittelnden Datenrahmen können beispielsweise anhand ihrer jeweiligen Ethernet Frame ID bzw. anhand einer Filtering Database in die Gruppen von PROFINET-Datenrahmen unterteilt werden.

Erfindungsgemäß werden für die Gruppen von PROFINET-Datenrahmen in Netzinfrastrukturgeräten jeweils separate Ressourcen zur Übermittlung der jeweiligen Gruppe zugeordneter Datenrahmen reserviert. Vorzugsweise sind die Netzinfrastrukturgeräte Switches oder Bridges. Dabei ist in jedem Netzinfrastrukturgerät für jede Gruppe von PROFINET-Datenrahmen als reservierte Ressource jeweils zumindest eine separate Sende-Queue vorgesehen, in die ausgehende oder weiterzuleitende Datenrahmen der jeweiligen Gruppe von PROFINET-Datenrahmen eingereiht werden. Mit Einführung geschützter Ressourcen für PROFINET-Datenverkehr wird erfindungsgemäß vermieden, dass knappe Ressourcen in ineffizienter Weise durch zeitunkritischen Datenverkehr allokiert werden.

Entsprechend einer vorteilhaften Ausgestaltung der vorliegenden Erfindung umfasst eine erste Gruppe von PROFINET-Datenrahmen zeitsynchron übermittelbare Datenrahmen und teilnetzübergreifend übermittelbare Datenrahmen, während eine zweite Gruppe von PROFINET-Datenrahmen Alarminformationen aufweisende Datenrahmen umfasst. Vorzugsweise ist eine dritte Gruppe von PROFINET-Datenrahmen vorgehen, die Verbindungssteuerungsinformationen aufweisende Datenrahmen umfasst. Darüber hinaus kann den Gruppen von PROFINET-Datenrahmen zumindest eine PROFINET-Leistungsklasse zugeordnet sein. Beispielsweise kann der ersten Gruppe von PROFINET-Datenrahmen die PROFINET-Leistungsklassen RT_CLASS_2 und RT_CLASS_UDP zugeordnet sein, während der zweiten Gruppe von PROFINET-Datenrahmen die PROFINET-Leistungsklassen RTA_CLASS_1 und RTA_CLASS_UDP zugeordnet sein kann. Der dritten Gruppe von PROFINET-Datenrahmen kann vorteilhafterweise die PROFINET-Leistungsklasse RPC zugeordnet sein. Damit können diesen Leistungsklassen separate Ressourcen, insbesondere Switching-Ressourcen, in Netzinfrastrukturgeräten zugewiesen werden.

Den entsprechend PROFINET-Protokoll zu übermittelnden Datenrahmen wird entsprechend einer weiteren Ausgestaltung des erfindungsgemäßen Verfahrens bei einer eingangsseitigen Filterung in den Netzinfrastrukturgeräten ein für PROFINET-Datenverkehr reservierter VLAN-Identifikator zugeordnet; allen übrigen Datenrahmen wird ein Standard-VLAN-Identifikator zugeordnet. Vorzugsweise wird der jeweilige VLAN-Identifikator für teilnetzübergreifend übermittelbare PROFINET-Datenrahmen und für Alarminformationen aufweisende PROFINET-Datenrahmen vor einer Einreihung des jeweiligen PROFINET-Datenrahmens in eine zugeordnete Sende-Queue eines Netzinfrastrukturgeräts durch den Standard-VLAN-Identifikator ersetzt. Auf diese Weise ist für einen IP-Stack in Bezug auf non-buffered communication nur ein VLAN sichtbar.

Das erfindungsgemäße Kommunikationsgerät, insbesondere ein Switch oder eine Bridge, ist zur Durchführung eines Verfahrens entsprechend vorangehenden Ausführungen vorgesehen und weist mehrere Anschlüsse für eine Verbindung mit Kommunikationsgeräten innerhalb eines Kommunikationsnetzes eines industriellen Automatisierungssystems auf. Außerdem umfasst das Kommunikationsgerät den Anschlüssen zugeordnete Sende- und Empfangseinheiten sowie ein die Sende- und Empfangseinheiten miteinander verbindendes Koppelelement. Des weiteren ist das Kommunikationsgerät dafür ausgestaltet und eingerichtet, dass entsprechend PROFINET-Protokoll zu übermittelnde Datenrahmen einem ausgewählten virtuellen lokalen Netz zugeordnet werden und dass die entsprechend PROFINET-Protokoll zu übermittelnden Datenrahmen in mehrere Gruppen von PROFINET-Datenrahmen unterteilt werden. Darüber hinaus ist das Kommunikationsgerät ferner dafür ausgestaltet und eingerichtet, dass für die Gruppen von PROFINET-Datenrahmen in Netzinfrastrukturgeräten jeweils separate Ressourcen zur Übermittlung der jeweiligen Gruppe zugeordneter Datenrahmen reserviert werden.

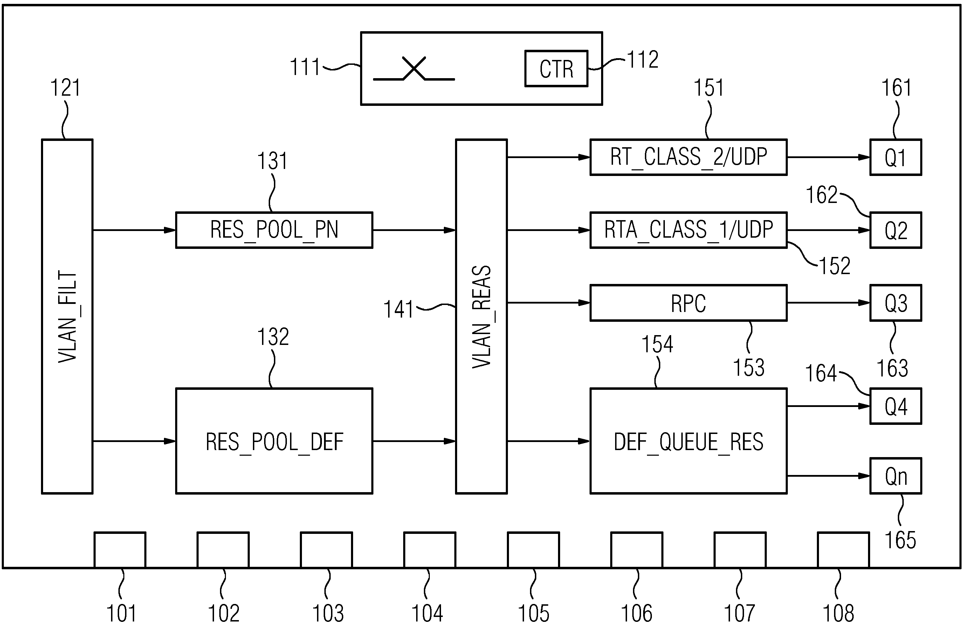

Die vorliegende Erfindung wird nachfolgend an einem Ausführungsbeispiel anhand der Zeichnung näher erläutert. Es zeigt die
- Figur: eine schematische Darstellung eines Switches zur Übermittlung von PROFINET-Datenrahmen in einem Kommunikationsnetz eines industriellen Automatisierungssystems.

Der in der Figur dargestellte Switch umfasst mehrere Ports 101-108 für eine Verbindung mit Kommunikations- bzw. Automatisierungsgeräten innerhalb eines Kommunikationsnetzes eines industriellen Automatisierungssystems. Die Kommunikations- bzw. Automatisierungsgeräte können kann beispielsweise auf Leitsystemebene einem SCADA-System (Supervisory Control and Data Acquisition) oder auf Feldebene einem Sensor- bzw. Aktorsystem des industriellen Automatisierungssystems zugeordnet sein. Ein solches Sensor- bzw. Aktorsystem kann wiederum einen Fertigungsroboter, einen Antrieb für ein Fördersystem oder eine Bedien- und Beobachtungsstation an einer Fertigungslinie umfassen.

Jedem der Ports 101-108 ist jeweils eine Sende- und Empfangseinheit zugeordnet, die mittels eines PHY- und MAC-Schaltkreises realisiert ist. Die Sende- und Empfangseinheiten sind über einen Backplane Switch 111 mit zugeordnetem Controller 112 steuerbar miteinander verbunden.

Der Switch ist dafür ausgestaltet und eingerichtet, dass entsprechend PROFINET-Protokoll zu übermittelnde Datenrahmen einem ausgewählten virtuellen lokalen Netz zugeordnet werden. Hierzu umfasst der Switch eine VLAN-Filtereinheit 121, durch die den entsprechend PROFINET-Protokoll zu übermittelnden Datenrahmen bei einer eingangsseitigen Filterung im Switch ein für PROFINET-Datenverkehr reservierter VLAN-Identifikator zugeordnet wird; allen übrigen Datenrahmen wird ein Default-VLAN-Identifikator zugeordnet. Entsprechend ihrem jeweiligen VLAN-Identifikator wird für die durch den Switch zu übermittelnden Datenrahmen einerseits ein gemeinsamer Ressourcen-Pool 131 für PROFINET-Datenverkehr und andererseits ein gemeinsamer Ressourcen-Pool 132 für sonstigen Datenverkehr vorallokiert. Nach dieser Vorallokierung erfolgt durch eine Umsetzereinheit 141 des Switches eine Änderung der zugeordneten VLAN-Identifikatoren für teilnetzübergreifend übermittelbare PROFINET-Datenrahmen und für Alarminformationen aufweisende PROFINET-Datenrahmen, und zwar vor einer Einreihung des jeweiligen PROFINET-Datenrahmens in eine zugeordnete Sende-Queue 161-165 des Switches. Dabei wird der bisher zugeordnete VLAN-Identifikator für diese PROFINET-Datenrahmen durch den Default-VLAN-Identifikator ersetzt. Somit ist für einen IP-Stack des Switches hinsichtlich non-buffered communication nur ein VLAN sichtbar, nämlich das Default-VLAN.

Außerdem ist der Switch dafür ausgestaltet und eingerichtet, dass die entsprechend PROFINET-Protokoll zu übermittelnden Datenrahmen in insgesamt 3 Gruppen von PROFINET-Datenrahmen unterteilt werden. Diese Unterteilung kann beispielsweise anhand der jeweiligen Ethernet Frame ID der PROFINET-Datenrahmen bzw. anhand einer Filtering Database (FDB) erfolgen. Dabei werden für jede Gruppe der PROFINET-Datenrahmen jeweils separate Switching-Ressourcen 151-153 reserviert. Für sonstigen Datenverkehr reservierte Switching-Ressourcen 154 werden gemeinsam verwaltet, so dass sonstigem Datenverkehr zugeordnete Datenrahmen in dem gemeinsamen Ressourcen-Pool 132 zugeordnete Sende-Queues 164-165 eingereiht werden.

Im vorliegenden Ausführungsbeispiel umfasst eine erste Gruppe 151 von PROFINET-Datenrahmen zeitsynchron übermittelbare Datenrahmen und teilnetzübergreifend übermittelbare Datenrahmen, während eine zweite Gruppe 152 von PROFINET-Datenrahmen Alarminformationen aufweisende Datenrahmen umfasst. Eine dritte Gruppe 153 von PROFINET-Datenrahmen umfasst Verbindungssteuerungsinformationen aufweisende Datenrahmen. Insbesondere ist den Gruppen 151-153 von PROFINET-Datenrahmen zumindest eine PROFINET-Leistungsklasse zugeordnet. So sind der ersten Gruppe 151 von PROFINET-Datenrahmen die PROFINET-Leistungsklassen RT_CLASS_2 und RT_CLASS_UDP zugeordnet, während der zweiten Gruppe 152 von PROFINET-Datenrahmen die PROFINET-Leistungsklassen RTA_CLASS_1 und RTA_CLASS_UDP zugeordnet sind. Der dritten Gruppe 153 von PROFINET-Datenrahmen ist die PROFINET-Leistungsklasse RPC zugeordnet. Im Switch ist für jede Gruppe 151-153 von PROFINET-Datenrahmen als reservierte Ressource im vorliegenden Ausführungsbeispiel jeweils eine separate Sende-Queue 161-163 vorgesehen, in die ausgehende oder weiterzuleitende Datenrahmen der jeweiligen Gruppe 151-153 von PROFINET-Datenrahmen eingereiht werden.

## Patentansprüche

1. Verfahren zur Datenübermittlung in einem Kommunikationsnetz eines industriellen Automatisierungssystems, bei dem
- entsprechend PROFINET-Protokoll zu übermittelnde Datenrahmen einem ausgewählten virtuellen lokalen Netz zugeordnet werden,
- die entsprechend PROFINET-Protokoll zu übermittelnden Datenrahmen in mehrere Gruppen von PROFINET-Datenrahmen unterteilt werden,
- für die Gruppen von PROFINET-Datenrahmen in Netzinfrastrukturgeräten jeweils separate Ressourcen zur Übermittlung der jeweiligen Gruppe zugeordneter Datenrahmen reserviert werden.

2. Verfahren nach Anspruch 1,
bei dem eine erste Gruppe von PROFINET-Datenrahmen zeitsynchron übermittelbare Datenrahmen und teilnetzübergreifend übermittelbare Datenrahmen umfasst, bei dem eine zweite Gruppe von PROFINET-Datenrahmen Alarminformationen aufweisende Datenrahmen umfasst und bei dem eine dritte Gruppe von PROFINET-Datenrahmen Verbindungssteuerungsinformationen aufweisende Datenrahmen umfasst.

3. Verfahren nach Anspruch 2,
bei dem den Gruppen von PROFINET-Datenrahmen zumindest eine PROFINET-Leistungsklasse zugeordnet ist, bei dem der ersten Gruppe von PROFINET-Datenrahmen die PROFINET-Leistungsklassen RT_CLASS_2 und RT_CLASS_UDP zugeordnet sind, bei dem der zweiten Gruppe von PROFINET-Datenrahmen die PROFINET-Leistungsklassen RTA_CLASS_1 und RTA_CLASS_UDP zugeordnet sind und bei dem der dritten Gruppe von PROFINET-Datenrahmen die PROFINET-Leistungsklasse RPC zugeordnet ist.

4. Verfahren nach einem der Ansprüche 1 bis 3,
bei dem die Netzinfrastrukturgeräte Switches oder Bridges sind und bei dem in jedem Netzinfrastrukturgerät für jede Gruppe von PROFINET-Datenrahmen als reservierte Ressource jeweils zumindest eine separate Sende-Queue vorgesehen ist, in die ausgehende oder weiterzuleitende Datenrahmen der jeweiligen Gruppe von PROFINET-Datenrahmen eingereiht werden.

5. Verfahren nach einem der Ansprüche 1 bis 4,
bei dem den entsprechend PROFINET-Protokoll zu übermittelnden Datenrahmen bei einer eingangsseitigen Filterung in den Netzinfrastrukturgeräten ein für PROFINET-Datenverkehr reservierter VLAN-Identifikator zugeordnet wird und bei dem allen übrigen Datenrahmen ein Standard-VLAN-Identifikator zugeordnet wird.

6. Verfahren nach Anspruch 5,
bei dem der jeweilige VLAN-Identifikator für teilnetzübergreifend übermittelbare PROFINET-Datenrahmen und für Alarminformationen aufweisende PROFINET-Datenrahmen vor einer Einreihung des jeweiligen PROFINET-Datenrahmens in eine zugeordnete Sende-Queue eines Netzinfrastrukturgeräts durch den Standard-VLAN-Identifikator ersetzt wird.

7. Verfahren nach einem der Ansprüche 1 bis 6,
bei dem die entsprechend PROFINET-Protokoll zu übermittelnden Datenrahmen anhand ihrer jeweiligen Ethernet Frame ID und/oder anhand einer Filtering Database in die Gruppen von PROFINET-Datenrahmen unterteilt werden

8. Kommunikationsgerät zur Durchführung eines Verfahrens nach einem der Ansprüche 1 bis 7
- mit mehreren Anschlüssen für eine Verbindung mit Kommunikationsgeräten innerhalb eines Kommunikationsnetzes eines industriellen Automatisierungssystems,
- mit den Anschlüssen zugeordneten Sende- und Empfangseinheiten,
- mit einem die Sende- und Empfangseinheiten miteinander verbindenden Koppelelement,
- wobei das Kommunikationsgerät dafür ausgestaltet und eingerichtet ist, dass entsprechend PROFINET-Protokoll zu übermittelnde Datenrahmen einem ausgewählten virtuellen lokalen Netz zugeordnet werden,
- wobei das Kommunikationsgerät ferner dafür ausgestaltet und eingerichtet ist, dass die entsprechend PROFINET-Protokoll zu übermittelnden Datenrahmen in mehrere Gruppen von PROFINET-Datenrahmen unterteilt werden,
- wobei das Kommunikationsgerät ferner dafür ausgestaltet und eingerichtet ist, dass für die Gruppen von PROFINET-Datenrahmen in Netzinfrastrukturgeräten jeweils separate Ressourcen zur Übermittlung der jeweiligen Gruppe zugeordneter Datenrahmen reserviert werden.

9. Kommunikationsgerät nach Anspruch 8,
bei dem das Kommunikationsgerät ein Switch oder eine Bridge ist.
